Europäisches Patentamt

European Patent Office

Office européen des brevets

(11) Veröffentlichungsnummer: **0 258 764**
**A1**

(12) **EUROPÄISCHE PATENTANMELDUNG**

(21) Anmeldenummer: 87112185.1

(22) Anmeldetag: 21.08.87

(51) Int. Cl.⁴: **B25J 9/10** , F16H 1/28

(30) Priorität: 04.09.86 DE 3630173

(43) Veröffentlichungstag der Anmeldung:
09.03.88 Patentblatt 88/10

(84) Benannte Vertragsstaaten:
**DE FR IT SE**

(71) Anmelder: **Manutec Gesellschaft für
Automatisierungs- und
Handhabungssysteme mbH
Gründlacher Strasse 248
D-8510 Fürth(DE)**

(72) Erfinder: **Kolb, Roland
Ahornweg 2
D-8551 Hemhofen(DE)**
Erfinder: **Eberle, Manfred
Würzburger Strasse 70
D-8520 Erlangen(DE)**

(74) Vertreter: **Mehl, Ernst, Dipl.-Ing. et al
Postfach 22 01 76
D-8000 München 22(DE)**

(54) **Antriebsanordnung bei einem Industrieroboter.**

(57) Die Erfindung betrifft ein Planetengetriebe für einen Gelenkroboter. Zur Spieleinstellung sind Planetenräder (73, 74) und Hohlrad (75, 76) in einer Radialebene (12) geteilt und die Hohlradteile (75, 76) in Umfangsrichtung gegeneinander verdrehbar.

FIG1

## Antriebsanordnung bei einem Industrieroboter

Die Erfindung bezieht sich auf eine Antriebsanordnung bei einem Industrieroboter mit einem Elektromotor und einem nachgeschalteten Planeten-Untersetzungsgetriebe, bei dem eine Stufe ein angetriebenes Sonnenrad, abtreibende Planetenräder und ein Hohlrad umfaßt.

Mit diesem Oberbegriff wird auf eine Anordnung Bezug genommen, wie sie insbesondere bei Gelenkantrieben für Industrieroboter bekannt ist (vgl. z.B. DE-AS 11 48 721).

Bei Gelenkantrieben für Roboter wurden bereits die verschiedensten Untersetzungsgetriebe benutzt, wie z.B. sogenannte Harmonicdrive-Getriebe oder auch Differenzialplanetengetriebe (vgl. z.B. europäische Patentanmeldung 48 905 oder DE-AS 11 48 721). Ein besonderes Problem bei allen Getrieben ist das Getriebespiel. Es ist bereits bekannt, Mittel vorzusehen, um Getriebe möglichst spielfrei einstellen zu können (vgl. z.B. europäische Patentanmeldung 89 129).

Besonders günstig als Untersetzungsgetriebe sind Planetengetriebe.

Die Aufgabe der vorliegenden Erfindung besteht darin, eine Antriebsanordnung mit einem Planetengetriebe auf einfache Weise so auszugestalten, daß es möglichst spielfrei einstellbar ist.

Diese Aufgabe wird erfindungsgemäß durch folgende Merkmale gelöst:

a) die Planetenräder sind in einer Radialebene geteilt und beide Teile jedes Planetenrades auf einer gemeinsamen Welle jeweils für sich verdrehbar gelagert,

b) das Hohlrad ist in der gleichen Radialebene geteilt und beide Teile gegeneinander in Umfangsrichtung drehbar.

Auf diese Weise kann durch einfaches Verspannen der beiden Hohlradteile das Getriebe in beiden Richtungen spielfrei eingestellt werden.

Vorteilhafterweise wird die Konstruktion ferner so getroffen, daß ein erstes feststehendes Hohlradteil vorgesehen wird und daß gegenüber diesem Teil das zweite Hohlradteil in beiden Drehrichtungen wahlweise verspannt werden kann. Auf diese Weise ist es möglich, falls die Getriebelose in einer Richtung nicht mehr kompensiert werden können, die jeweils anderen Zahnflanken des Getriebes zur Spieleinstellung heranzuziehen.

Anhand eines in der Zeichnung dargestellten Ausführungsbeispieles sei die Erfindung näher erläutert;
es zeigen:

Figur 1 einen Querschnitt durch ein Robotergelenk mit Antriebsmotor und Planetenuntersetzungsgetriebe und

Figur 2 einen Querschnitt längs der Linie II-II in Figur 1.

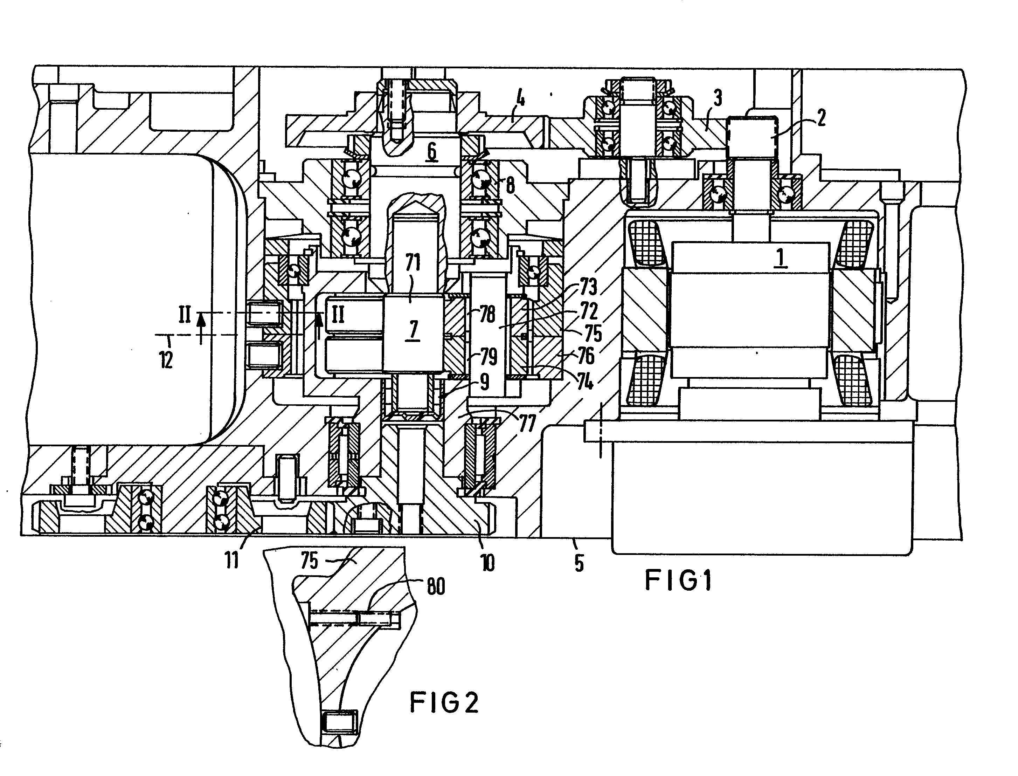

Wie aus Figur 1 ersichtlich, ist in einem Roboterarm ein Elektromotor 1 angeordnet, dessen Ritzel 2 über zwei Stirnzahnräder 3 und 4 die Welle 6 eines Planeten-Untersetzungsgetriebes 7 antreibt. Die Welle 6 ist dabei beidseitig des eigentlichen Getriebes in zwei Lagern 8 und 9 gehalten. Auf der Welle 6 sitzt das Sonnenrad 71, welches mit drei, jeweils in der Radialebene 12 geteilten Planetenrädern in Eingriff steht. In der Zeichnung sind die beiden hälftigen Teile 73 und 74 eines Planetenrades dargestellt. Jedes Teil 73 bzw. 74 des Planetenrades ist für sich mittels Lagern 78, 79 drehbar auf einer der Wellen 72 des Planetenträgers gelagert. Das die Planetenräder umschließende Hohlrad ist ebenfalls in der Radialebene 12 in zwei Teile 75 bzw. 76 geteilt, wobei jedes dieser Teile mit jeweils den zugeordneten Hälften der Planetenräder in Verbindung steht. Die Bewegung der Wellen 72 in Umfangsrichtung wird über den Steg 77 auf ein Stirnrad 10 übertragen und von hieraus über weitere Stirnräder 11 an ein nicht dargestelltes Schwenkteil.

Zur Einstellung des Spieles sind die beiden Teile 75 und 76 des Hohlrades gegeneinander in Umfangsrichtung um einige Winkelminuten verdrehbar. Hierzu dienen, wie beispielsweise aus Figur 2 ersichtlich, Schraubstifte 80. Bei der vorstehend geschilderten Konstruktion ist das Teil 75 gegenüber dem festliegenden Teil 76 verdrehbar, und zwar in beiden Drehrichtungen. Hierdurch ist es neben der genauen Dosierung des Spieles auch möglich, die Spielfestlegung hinsichtlich der Getriebeflanken im Planetengetriebe zu wechseln.

## Ansprüche

1. Antriebsanordnung bei einem Industrieroboter mit

a) einem Elektromotor und

b) einem nachgeschalteten Planeten-Untersetzungsgetriebe, bei dem eine Stufe ein angetriebenes Sonnenrad, abtreibende Planetenräder und ein Hohlrad umfaßt, **gekennzeichnet** durch folgende Merkmale:

c) die Planetenräder sind in einer Radialebene (12) geteilt und beide Teile (73, 74) jedes Planetenrades auf einer gemeinsamen Welle (72) jeweils für sich verdrehbar gelagert und

d) das Hohlrad ist in der gleichen Radialebene geteilt und beide Teile (75, 76) gegeneinander in Umfangsrichtung verdrehbar.

2. Antriebsanordnung nach Anspruch 2, **gekennzeichnet** durch ein erstes feststehendes Hohlradteil (76) und ein gegenüber diesem in beiden Drehrichtungen verspannbares zweites Hohlradteil (75).

FIG1

FIG2

0 258 764

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 954 664 (S.A. DES ANCIENS ETABLISSEMENTS CH. BERTHIEZ) <br> * Seite 2, Zeilen 53-79 * | 1,2 | B 25 J 9/10 <br> F 16 H . 1/28 |
| A,D | DE-B-1 148 721 (GENERAL MILLS INC.) <br> * Anspruch 1 * | 1 | |
| A | DE-A-3 503 112 (MITSUBISHI DENKI K.K.) <br> * Anspruch 1 * | 1 | |
| A | GB-A-2 135 230 (MITSUBISHI DENKI K.K.) <br> * Seite 2, Zeilen 37-72 * | 1 | |
| A | WO-A-8 402 301 (MTS SYSTEMS CORP.) <br> * Seite 18, Zeile 22 - Seite 19, Zeile 10 * | 1 | RECHERCHIERTE SACHGEBIETE (Int. Cl.4) <br><br> B 25 J <br> F 16 H |
| A | DE-B-2 608 888 (A. FRIEDR. FLENDER & CO.) <br> * Spalte 4, Zeilen 8-16 * | 1 | |
| A | CH-A- 415 216 (MAAG-ZAHNRÄDER & MASCHINEN AG) <br> * Anspruch * | 1 | |

Der vorliegende Recherchenbericht wurde für alle Patentansprüche erstellt.

| Recherchenort | Abschlußdatum der Recherche | Prüfer |
|---|---|---|
| DEN HAAG | 02-11-1987 | LAMMINEUR P.C.G. |